# EUROPEAN PATENT SPECIFICATION

(11) **EP 4 700 968 B1**
(45) Date of publication and mention of the grant of the patent: **23.09.2026**
(21) Application number: 25195089.5
(22) Date of filing: 11.08.2025
(51) Int. Cl.: H01M 50/588, H01M 50/528, H01M 50/296, H01M 50/271

(54) **BATTERY MODULE AND BATTERY PACK**
BATTERIEMODUL UND BATTERIEPACK
MODULE DE BATTERIE ET BLOC-BATTERIE

(30) Priority: 23.08.2024 CN 202422065686 U
(43) Date of publication of application: 25.02.2026
(73) Proprietor: AESC Japan Ltd., Yokohama-Shi, Kanagawa 220-0012 (JP)
(72) Inventor: BAI, Yulong, Pudong New Area Shanghai, 201315 (CN); YANG, Yunting, Pudong New Area Shanghai, 201315 (CN)
(74) Representative: Becker, Eberhard

(56) References cited:
- EP-A1- 4 475 329
- WO-A1-2024/019427
- CN-A- 116 802 925
- CN-U- 221 080 217

## Description

### BACKGROUND

### Field of the Disclosure

The present disclosure belongs to the field of power battery technology, and particularly relates to a battery module and a battery pack.

### Description of Related Art

The battery modules of the battery pack output power externally through output terminal bus bars. The configuration and fixation of the output terminal bus bars rely on separately configured bus bar brackets within the battery modules. However, the configuration and fixation of output terminal bus bars through bus bar brackets increases the number of components, occupies substantial space, and is detrimental to cost reduction and enhancement of the energy density of the battery pack.

WO 2024/019427 A1 relates to a cell assembly, and battery pack and vehicle including same. CN 221080217 U relates to a battery module, which belongs to the technical field of new energy batteries, the battery module includes a module shell, a battery cell module and a busbar. CN 116802925 A relates to a battery module, in which when an internal pressure in the module frame rises, the blocking member moves to seal a gap between the corresponding opening and the terminal bus bar.

### SUMMARY OF THE DISCLOSURE

The invention is set out in the appended set of claims. The following disclosure serves a better understanding of the present invention. Given the deficiencies of the related art described above, the purpose of the present disclosure is to provide a battery module and a battery pack to solve the problems of complex structure of the battery module and the difficulty in configuring and fixing the output terminal bus bars in the related art, so as to simplify the structure of the battery module and the battery pack, improve space utilization, reduce cost and enhance energy density.

To achieve the above purpose and other related purposes, the present disclosure provides a battery module, including: a housing, the housing having a first opening; a cell stack, the cell stack having a tab side, the cell stack being disposed in the housing, and the tab side of the cell stack corresponding to the first opening; an adhesive block, the adhesive block filling the first opening to seal the first opening and cover the tab side of the cell stack, the outer sidewall of the adhesive block forming a part of the outer sidewall of the battery module; an output terminal bus bar assembly, the output terminal bus bar assembly being directly positioned and disposed on the housing, and electrically connected with the cell stack, the adhesive block covering a part of the output terminal bus bar assembly, and another part of the output terminal bus bar assembly being exposed from the adhesive block and the housing to construct an external electrical connection part.

Optionally, the output terminal bus bar assembly includes an output terminal bus bar and an insulating member. The output terminal bus bar has an internal electrical connection part electrically connected to the cell stack and the external electrical connection part. The insulating member covers a fixed part of the output terminal bus bar except for the internal electrical connection part and the external electrical connection part.

Optionally, the housing includes a side panel, the output terminal bus bar is positioned and disposed on the side panel.

Optionally, an external nut is provided on the external electrical connection part.

Optionally, the output terminal bus bar is in a plate shape. The output terminal bus bar is located on the inner side of the side panel, and is parallel to and fitted with the side panel.

Optionally, a positioning groove is provided on the inner sidewall of the side panel. At least a part of the output terminal bus bar is positioned and disposed in the positioning groove.

Optionally, a second opening corresponding to the external electrical connection part is formed on the side panel. The external electrical connection part is exposed from the adhesive block and the housing at the second opening.

Optionally, the output terminal bus bar is locally bent and extends toward the tab side of the cell stack to form the external electrical connection part. A third opening corresponding to the external electrical connection part is provided at the top end of the adhesive block. The external electrical connection part is exposed from the adhesive block and the housing at the third opening.

Optionally, the housing further includes a bottom panel and an upper cover. The bottom panel and two oppositely arranged side panels are connected and cooperate with the upper cover to construct the housing having the first opening at both ends.

Optionally, the adhesive block wraps a part of the output terminal bus bar assembly and at least a part of the tab of the cell stack.

Optionally, the adhesive block includes a foam adhesive.

Optionally, the insulating member includes an insulating film.

To achieve the above purpose and other related purposes, the present disclosure further provides a battery pack, including the battery module as described above.

As described above, the battery module and battery pack of the present disclosure have at least the following advantageous effects. The adhesive block fills the opening of the housing, sealing the opening and upper covering the tab side of the cell stack through the adhesive block. In this way, not only that it is possible to omit the need for additional parts to seal the opening, but also it helps to reduce costs and achieve thermal protection through the adhesive block to prevent heat spread. Based on this, the output terminal bus bar assembly is directly positioned and disposed on the housing and has an external electrical connection part exposed from the adhesive block and housing, which is convenient for external output, solving the problem of difficult positioning and configuration of the output terminal bus bar assembly. Also, such design omits the need for additional parts to provide positioning and configuration support for the output terminal bus bar, reduces the quantity of parts, improves space utilization, and achieves cost reduction and improves the energy density of the battery module and battery pack.

### BRIEF DESCRIPTION OF THE DRAWINGS

FIG. 1 is a structural view of Embodiment One of the battery module of the present disclosure.
FIG. 2 is a partial exploded view of the battery module in FIG. 1.
FIG. 3 is a partial structural view of the connection between the output terminal bus bar assembly and the side panel in FIG. 1.
FIG. 4 is a partial exploded view of the output terminal bus bar assembly and the side panel in FIG. 1.
FIG. 5 is a structural view of Embodiment Two of the battery module of present disclosure.
FIG. 6 is a partial structural view of the connection between the output terminal bus bar assembly and the side panel in FIG. 5.
FIG. 7 is a partial exploded view of the output terminal bus bar assembly and the side panel in FIG. 5.

### DESCRIPTION OF EMBODIMENTS

The implementation of present disclosure is explained below by specific embodiments. Those skilled in this technology may easily understand other advantages and effects of present disclosure from the content disclosed in this specification.

It should be noted that the structure, proportion, size, and so on shown in the drawings attached to this specification are only used to match the content disclosed in the specification for understanding and reading by those skilled in this technology, and are not intended to limit the restrictive conditions under which present disclosure may be implemented. Therefore, they do not have substantive technical significance. Any modification of structure, change in proportion relationship, or adjustment in size, as long as it does not affect the effectiveness that present disclosure can produce and the purpose it can achieve, should still fall within the scope that can be covered by the technical content disclosed in present disclosure. At the same time, terms such as "upper", "lower", "left", "right", "middle", and "one" used in this specification are also only for clarity of description, and not intended to limit the scope in which present disclosure may be implemented. Changes or adjustments in their relative relationships, without substantial changes to the technical content, should also be considered within the scope in which present disclosure may be implemented.

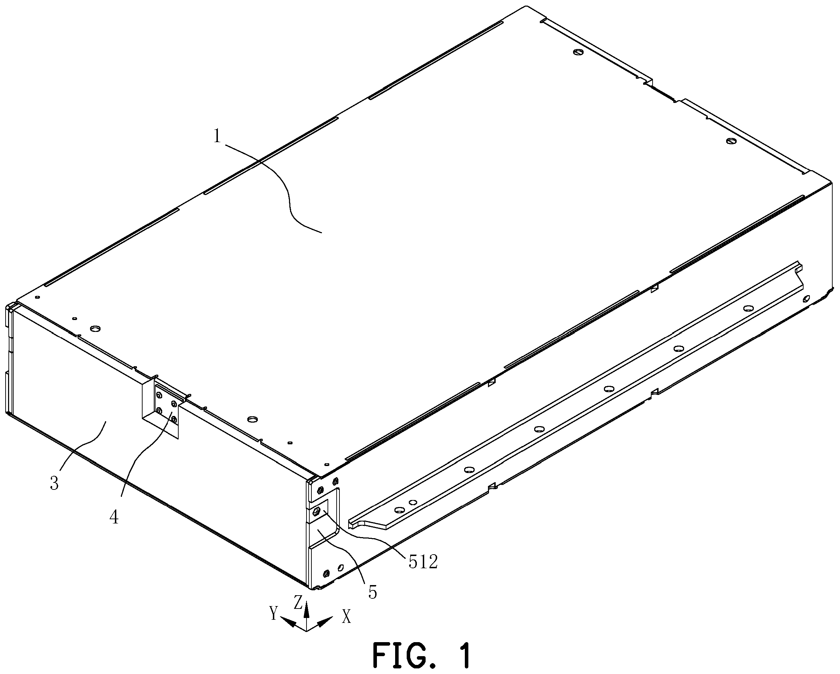

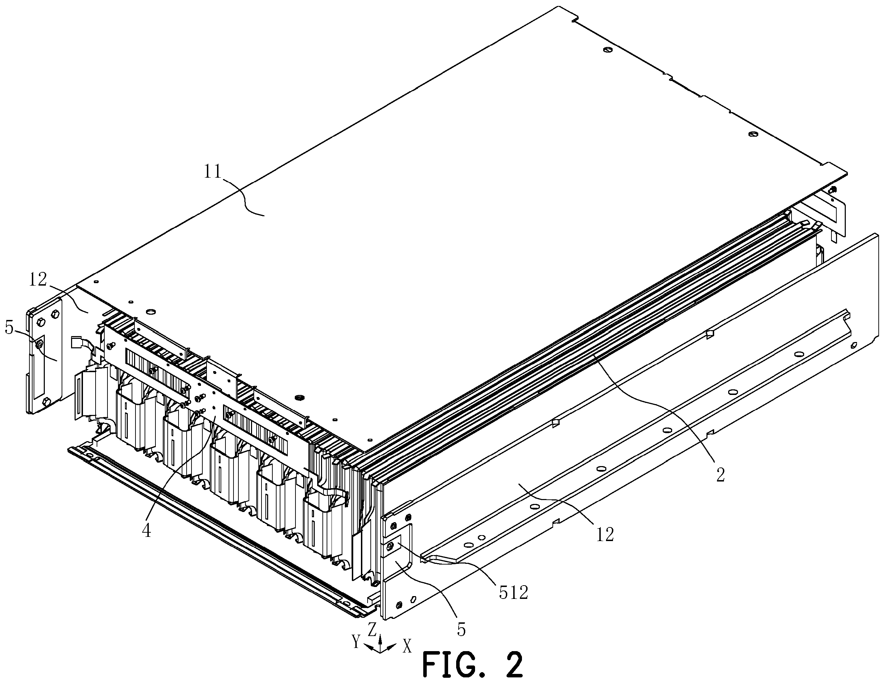

Referring to FIG. 1, FIG. 2 and FIG. 5, in some optional embodiments, the present disclosure provides a battery pack, which includes a battery module.

Referring to FIG. 1, FIG. 2 and FIG. 5, in some optional embodiments, the battery module provided by the present disclosure includes a housing 1, a cell stack 2, an adhesive block 3, and an output terminal bus bar assembly 5. In addition to the above components, the battery module may also include a sampling assembly 4. The housing 1 has a first opening. The cell stack 2 has a tab side. The cell stack 2 is disposed in the housing 1, and the tab side of the cell stack 2 corresponds to the first opening. The adhesive block 3 fills the first opening to seal the first opening and covers the tab side of the cell stack 2. The outer sidewall of the adhesive block 3 forms a part of the outer sidewall of the battery module; that is to say, the outer side of the adhesive block 3 does not have other structures shielding the adhesive block 3, so that the adhesive block 3 may serve the function and achieve the effect as the end panel of a conventional battery module.

Furthermore, the output terminal bus bar assembly 5 is directly positioned and disposed on the housing 1, and is electrically connected with the cell stack 2. The adhesive block 3 covers a part of the output terminal bus bar assembly 5, and another part of the output terminal bus bar assembly 5 is exposed from the adhesive block 3 and the housing 1 to construct an external electrical connection part 512. The external electrical connection part 512 is used for external electrical connection of the cell stack 2 in order to achieve external output of the electricity of the cell stack 2 through the output terminal bus bar assembly 5.

Optionally, the adhesive block 3 wraps a part of the output terminal bus bar assembly 5 and at least a part of the tab of the cell stack 2. The adhesive block 3 includes a foam adhesive, which is simple, convenient, and quick for filling, with good insulation and heat insulation effects.

Optionally, the sampling assembly 4 is located inside the housing 1. The sampling assembly 4 may be directly positioned and disposed on the housing 1, and is electrically connected with the cell stack 2. The electrical connection between the sampling assembly 4 and the cell stack 2 may enable collection of information such as temperature and voltage of the cell stack 2. The cell stack 2 includes multiple stacked battery cells. The battery cells have tabs. The tab side of the cell stack 2 and the tabs of the battery cells are located on the same side, and the sampling assembly 4 is electrically connected with the tabs of the battery cells. Furthermore, the sampling assembly 4 includes a flexible circuit board and sampling elements. The flexible circuit board is electrically connected with the tabs of the cell stack 2 through the sampling element, and the sampling element is electrically connected with the tabs of the battery cells to collect information of the battery cells, wherein the sampling element includes nickel sheets.

Optionally, the output terminal bus bar assembly 5 includes an output terminal bus bar 51 and an insulating member 52. The output terminal bus bar 51 has an internal electrical connection part 511 that is electrically connected with the cell stack 2 and an external electrical connection part 512. The insulating member 52 covers the fixed part of the output terminal bus bar 51 except for the internal electrical connection part 511 and the external electrical connection part 512. The output terminal bus bar 51 includes copper bus or aluminum bus. An external nut 53 is disposed on the external electrical connection part 512. The external nut 53 is used for external electrical connection, and the external nut 53 may be fixed with the external electrical connection part 512 by embedded fixing, riveting fixing, or other fixing methods. The internal electrical connection part 511 includes a tab welding area and a nickel sheet welding area. The tab welding area is welded and fixed with the tabs of the battery cells, and the nickel sheet welding area is welded and fixed with nickel sheets. Furthermore, the insulating member 52 includes an insulating film. The insulating member 52 is made of an insulating material with insulation performance, and the insulating film may be heat-pressed and used for wrapping the output terminal bus bar 51.

Optionally, the housing 1 includes a side panel 12. The output terminal bus bar 51 is positioned and disposed on the side panel 12, and the output terminal bus bar 51 is fixed to the side panel 12 by adhesive or connected and fixed through a fastening assembly. The fastening assembly includes screws, or, the fastening assembly includes a fastening bolt 61 and a fastening nut 62. The fastening nut 62 is fixed on the side panel 12. The bolt passes through the output terminal bus bar 51 and connects with the fastening nut 62 to securely connect the output terminal bus bar assembly 5 with the side panel 12, making the connection simple, convenient, and reliable. Furthermore, the quantity of side panels 12 is two. The two side panels 12 are arranged opposite to each other. The housing 1 further includes a bottom panel 13 and an upper cover 11. The bottom panel 13 connects with the two oppositely arranged side panels 12 and cooperates with the upper cover 11 to construct a housing 1 with openings at both ends. Specifically, the bottom panel 13 is located between the two side panels 12, and the two ends of the bottom panel 13 are connected with the two side panels 12 to form a U-shaped structure with the opening facing the upper cover 11. This structural design omits the end panel that seals the first opening, which benefits simplifying the structure and reducing weight. In the present application, the distribution direction of the upper cover 11 and the bottom panel 13, the height direction of the side panel 12, the height direction of the adhesive block 3, and the height direction of the battery module are the same, which is the Z direction in the drawings. The length direction of the cell stack 2, the length direction of the battery cells, and the length direction of the side panel 12 are the same, which is the X direction in the drawings. The output terminal bus bar 51 is directly positioned and disposed on the side panel 12, allowing the output terminal bus bar assembly 5 to be integrated on the side panel 12, so that the output terminal bus bar 51 and the side panel 12 can be disposed together as a whole, making configuration simple and convenient. It may be understood that the output terminal bus bar 51 is not limited to being positioned and disposed on the side panel 12, but may also be disposed on other parts of the housing 1, such as the upper cover 11.

Optionally, the upper cover 11 is provided with an adhesive injection hole. The foam adhesive may be injected into the housing 1 through the adhesive injection hole to form an adhesive block 3 to seal the opening of the housing 1 and cover the tab side of the cell stack 2. Furthermore, the adhesive block 3 wraps at least a part of the sampling assembly 4 and at least a part of the tab 21 of the cell stack 2. During specific configuration, a fixture may be used to seal the opening first, then the foam adhesive is injected into the housing 1. After the foam adhesive is completely foamed and formed a stable adhesive block structure that seals the opening, the fixture is removed, thereby completing the configuration of the adhesive block 3.

In the battery module of the above embodiment, the housing 1 has a first opening, and the opening and the tab side of the cell stack 2 are sealed and covered by the adhesive block 3. The adhesive block 3 forms a part of the outer sidewall of the battery module. In this way, not only that it is possible to omit the need for an additional end panel to seal the first opening, benefiting structure simplification and weight reduction, but also the adhesive block 3 has heat insulation and flame retardant effects, which may provide protection when thermal runaway occurs in the battery module, thus reducing the risk of thermal propagation. In addition, the output terminal bus bar assembly 5 is directly positioned and disposed on the housing 1, with the housing 1 providing positioning support for the output terminal bus bar assembly 5. Such design may omit the need for an additional bus bar bracket to achieve the positioning and configuration of the output terminal bus bar assembly 5, reducing the quantity of parts and overall weight, helping to reduce costs, enhancing space utilization and energy density of the battery module. The output terminal bus bar assembly 5 has an external electrical connection part 512 exposed from the adhesive block 3 and the housing 1 to facilitate external electrical connection of the cell stack 2, thereby achieving external output of the electricity of the cell stack 2, and further achieving external output of electrical energy of the battery module.

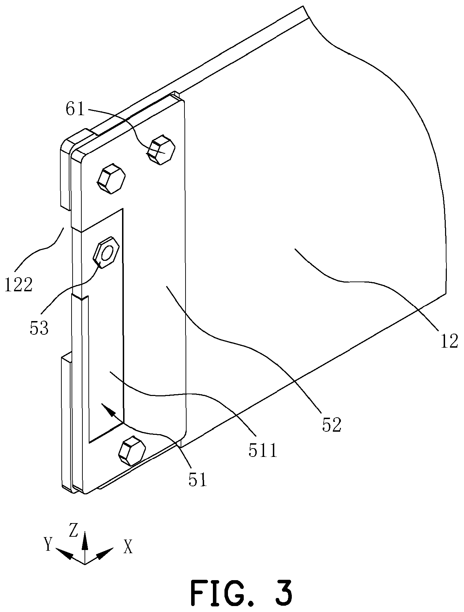

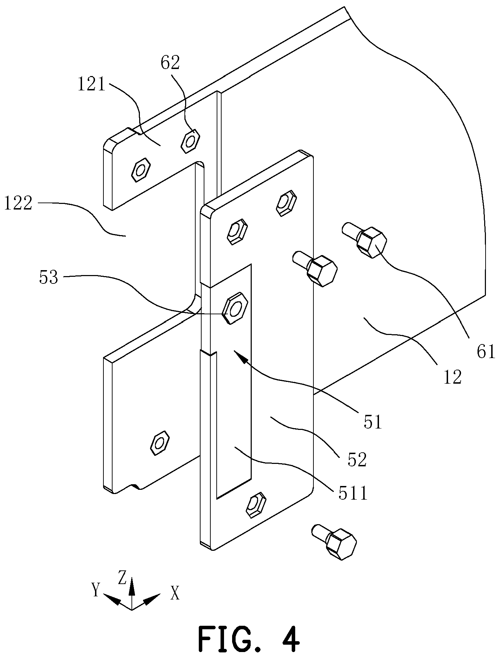

Referring to FIG. 1 to FIG. 4, in some optional embodiments, the output terminal bus bar 51 is plate-shaped. The output terminal bus bar 51 is located on the inner side of the side panel 12, and is parallel to and fitted with the side panel 12. The structural layout is compact, which is beneficial for saving space and improving space utilization. Alternatively, the extension direction of the output terminal bus bar 51 is the same as the extension direction of the side panel 12. Specifically, the height direction of the output terminal bus bar 51, the height direction of the side panel 12, and the height direction of the battery module are the same, i.e., the Z direction in the drawings. The length direction of the output terminal bus bar 51, the length direction of the side panel 12, and the length direction of the battery module are the same, i.e., the X direction in the drawings.

Optionally, a positioning groove 121 is provided on the inner sidewall of the side panel 12. At least a part of the output terminal bus bar 51 is positioned and disposed in the positioning groove 121. The side panel 12 provides space for the positioning and configuration of the output terminal bus bar 51 through thinning treatment, which is beneficial for improving space utilization, and the positioning and configuration operation of the output terminal bus bar 51 is simple and convenient.

Optionally, the side panel 12 is provided with a second opening 122 corresponding to the external electrical connection part 512, the external electrical connection part 512 is exposed from the adhesive block 3 and the housing 1 at the second opening 122. The second opening 122 is provided in the positioning groove 121, and passes through the side panel 12 along the thickness direction of the side panel 12, and one end of the second opening 122 passes through one end surface of the side panel 12 along the length direction of the side panel 12. In the present disclosure, the thickness direction of the side panel 12 is the same as the thickness direction of the output terminal bus bar 51, i.e., the Y direction in the drawings.

Optionally, the external nut 53 may be at least partially embedded in the external electrical connection part 512 or protrude on the inner side of the external electrical connection part 512. The inner side of the external electrical connection part 512 is a side facing the cell stack 2.

In the battery module of the above embodiment, the output terminal bus bar 51 has a simple structure, compact layout, and occupies small space, thereby reducing the overall space occupied in the output terminal bus bar assembly 5, and further improving the space utilization of the battery module, which is beneficial for enhancing the energy density of the battery module.

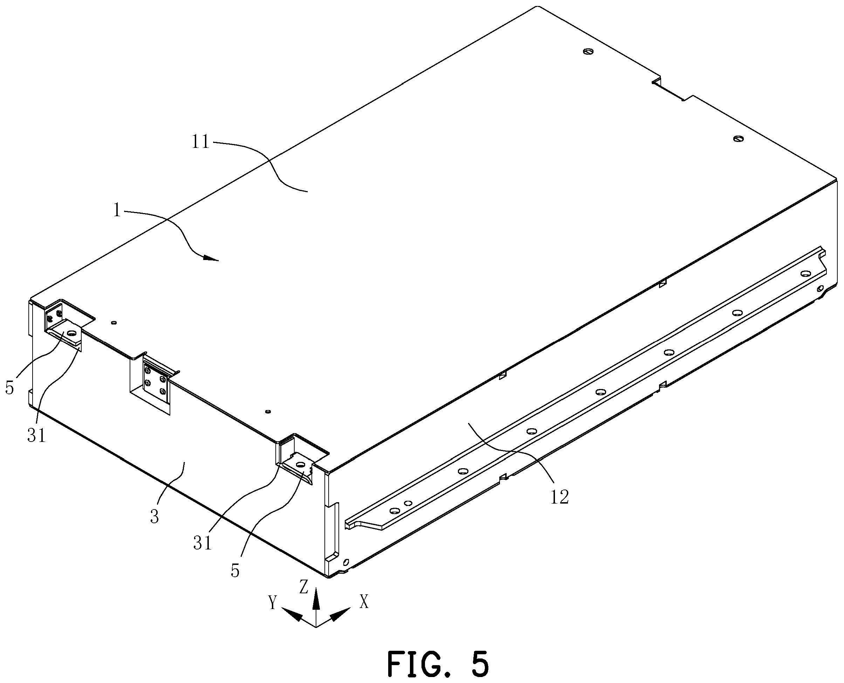

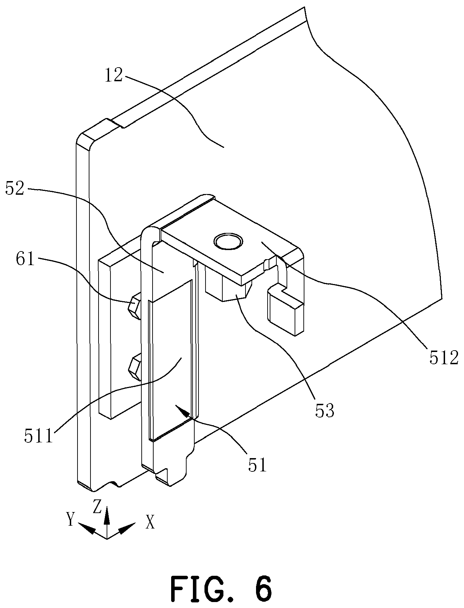

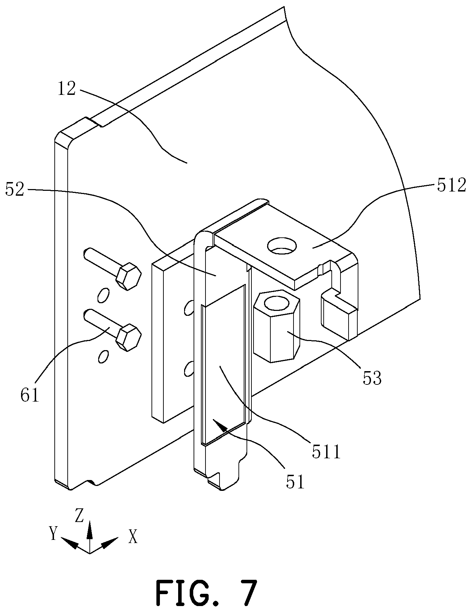

Referring to FIG. 5 to FIG. 7, in some optional embodiments, the output terminal bus bar 51 is locally bent and extends toward the tab side of the cell stack 2 to form the external electrical connection part 512. The top end of the adhesive block 3 is provided with a third opening 31 corresponding to the external electrical connection part 512. The external electrical connection part 512 is exposed from the adhesive block 3 and the housing 1 from the third opening 31.

Optionally, the upper cover 11 is provided with a fourth opening corresponding to the third opening 31, so that the output terminal bus bar 51 may output externally from the top end of the battery module, which helps to reduce the space occupied in the battery module in its length direction.

Optionally, the external nut 53 is fixed on the external electrical connection part 512, and is located on one side of the external electrical connection part 512 facing away from the upper cover 11.

In the battery module of the above embodiment, the output terminal bus bar 51 is exposed from the third opening 31 on the adhesive block 3, which facilitates external connection, facilitates the external output of the cell stack 2, thereby facilitating the external output of the battery module. The third opening 31 is disposed at the top end of the adhesive block 3, which facilitates the external output of the output terminal bus bar 51 from the top end of the adhesive block 3. That is, such design facilitates the external output of the output terminal bus bar 51 along the height direction of the battery module, which is beneficial for reducing the space occupied in the length direction of the battery module.

In the battery module and battery pack of present disclosure, the output terminal bus bar assembly 5 is fixed on the housing 1, which may omit the need for additionally setting a bus bar bracket to provide configuration support for the output terminal bus bar assembly 5, which is beneficial for reducing the quantity of parts, reducing weight, improving space utilization, and enhancing the energy density of the battery module and battery pack.

In the description of this specification, reference to terms such as "this embodiment", "example", "specific example", etc., means that the specific features, structures, materials, or characteristics described in combination with that embodiment or example are included in at least one embodiment or example of present disclosure. In this specification, the illustrative expressions of the above terms do not necessarily refer to the same embodiment or example. Moreover, the described specific features, structures, materials, or characteristics may be combined in any appropriate manner in one or more embodiments or examples.

## Claims

1. A battery module, comprising:
a housing (1), the housing (1) having a first opening;
a cell stack (2), the cell stack (2) having a tab side, the cell stack (2) being disposed in the housing (1), and the tab side of the cell stack (2) corresponding to the first opening;
an adhesive block (3);
an output terminal bus bar assembly (5), the output terminal bus bar assembly (5) being directly positioned and disposed on the housing (1), and electrically connected with the cell stack (2), the adhesive block (3) covering a part of the output terminal bus bar assembly (5), and another part of the output terminal bus bar assembly (5) being exposed from the adhesive block (3) and the housing (1) to construct an external electrical connection part (512),
wherein the battery module is **characterized in that**
the adhesive block (3) fills the first opening to seal the first opening and cover the tab side of the cell stack (2), and
an outer sidewall of the adhesive block (3) forms a part of an outer sidewall of the battery module.

2. The battery module according to claim 1, wherein the output terminal bus bar assembly (5) comprises an output terminal bus bar (51) and an insulating member (52), the output terminal bus bar (51) has an internal electrical connection part (511) electrically connected to the cell stack (2) and the external electrical connection part (512), the insulating member (52) covers a fixed part of the output terminal bus bar (51) except for the internal electrical connection part (511) and the external electrical connection part (512).

3. The battery module according to claim 2, wherein the housing (1) comprises a side panel (12), the output terminal bus bar (51) is positioned and disposed on the side panel (12).

4. The battery module according to claim 2, wherein an external nut (53) is provided on the external electrical connection part (512).

5. The battery module according to claim 3, wherein the output terminal bus bar (51) is in a plate shape, the output terminal bus bar (51) is located on an inner side of the side panel (12), and is parallel to and fitted with the side panel (12).

6. The battery module according to claim 5, wherein a positioning groove (121) is provided on an inner sidewall of the side panel (12), at least a part of the output terminal bus bar (51) is positioned and disposed in the positioning groove (121).

7. The battery module according to claim 5, wherein a second opening (122) corresponding to the external electrical connection part (512) is formed on the side panel (12), the external electrical connection part (512) is exposed from the adhesive block (3) and the housing (1) at the second opening (122).

8. The battery module according to claim 2, wherein the output terminal bus bar (51) is locally bent and extends toward the tab side of the cell stack (2) to form the external electrical connection part (512), a third opening (31) corresponding to the external electrical connection part (512) is provided at a top end of the adhesive block (3), the external electrical connection part (512) is exposed from the adhesive block (3) and the housing (1) at the third opening (31).

9. The battery module according to claim 3, wherein the housing (1) further comprises a bottom panel (13) and an upper cover (11), the bottom panel (13) and the two oppositely arranged side panels (12) are connected and cooperate with the upper cover (11) to construct the housing (1) having the first opening at both ends.

10. The battery module according to claim 1, wherein the adhesive block (3) wraps a part of the output terminal bus bar assembly (5) and at least a part of a tab of the cell stack (2).

11. The battery module according to claim 1, wherein the adhesive block (3) comprises a foam adhesive.

12. The battery module according to claim 2, wherein the insulating member (52) comprises an insulating film.

13. A battery pack, comprising the battery module according to any one of claims 1-12.

## Patentansprüche

1. Batteriemodul, umfassend:
ein Gehäuse (1), wobei das Gehäuse (1) eine erste Öffnung aufweist;
einen Zellstapel (2), wobei der Zellstapel (2) eine Laschenseite aufweist, der Zellstapel (2) in dem Gehäuse (1) angeordnet ist und die Laschenseite des Zellstapels (2) der ersten Öffnung entspricht;
einen Klebstoffblock (3);
eine Ausgangsanschluss-Sammelschienenanordnung (5), wobei die Ausgangsanschluss-Sammelschienenanordnung (5) direkt auf dem Gehäuse (1) positioniert und angeordnet ist und elektrisch mit dem Zellstapel (2) verbunden ist, wobei der Klebstoffblock (3) einen Teil der Ausgangsanschluss-Sammelschienenanordnung (5) abdeckt und ein weiterer Teil der Ausgangsanschluss-Sammelschienenanordnung (5) aus dem Klebstoffblock (3) und dem Gehäuse (1) freiliegt, um ein äußeres elektrisches Verbindungsteil (512) zu bilden,
wobei das Batteriemodul **dadurch gekennzeichnet ist, dass**
der Klebstoffblock (3) die erste Öffnung ausfüllt, um die erste Öffnung abzudichten und die Laschenseite des Zellstapels (2) abzudecken, und
eine äußere Seitenwand des Klebstoffblocks (3) einen Teil einer äußeren Seitenwand des Batteriemoduls bildet.

2. Batteriemodul nach Anspruch 1, wobei die Ausgangsanschluss-Sammelschienenanordnung (5) eine Ausgangsanschluss-Sammelschiene (51) und ein Isolierelement (52) umfasst, wobei die Ausgangsanschluss-Sammelschiene (51) ein inneres elektrisches Verbindungsteil (511), das elektrisch mit dem Zellstapel (2) verbunden ist, und das äußere elektrische Verbindungsteil (512) aufweist, wobei das Isolierelement (52) ein festes Teil der Ausgangsanschluss-Sammelschiene (51) mit Ausnahme des inneren elektrischen Verbindungsteils (511) und des äußeren elektrischen Verbindungsteils (512) abdeckt.

3. Batteriemodul nach Anspruch 2, wobei das Gehäuse (1) eine Seitenplatte (12) umfasst, die Ausgangsanschluss-Sammelschiene (51) an der Seitenplatte (12) positioniert und angeordnet ist.

4. Batteriemodul nach Anspruch 2, wobei an dem äußeren elektrischen Verbindungsteil (512) eine Außenmutter (53) bereitgestellt ist.

5. Batteriemodul nach Anspruch 3, wobei die Ausgangsanschluss-Sammelschiene (51) plattenförmig ist, sich die Ausgangsanschluss-Sammelschiene (51) auf einer Innenseite der Seitenplatte (12) befindet und parallel zu der Seitenplatte (12) verläuft und an der Seitenplatte (12) angebracht ist.

6. Batteriemodul nach Anspruch 5, wobei an einer inneren Seitenwand der Seitenplatte (12) eine Positionierungsnut (121) bereitgestellt ist und zumindest ein Teil der Ausgangsanschluss-Sammelschiene (51) in der Positionierungsnut (121) positioniert und angeordnet ist.

7. Batteriemodul nach Anspruch 5, wobei an der Seitenplatte (12) eine zweite Öffnung (122) gebildet ist, die dem äußeren elektrischen Verbindungsteil (512) entspricht, und wobei das äußere elektrische Verbindungsteil (512) an der zweiten Öffnung (122) aus dem Klebstoffblock (3) und dem Gehäuse (1) freiliegt.

8. Batteriemodul nach Anspruch 2, wobei die Ausgangsanschluss-Sammelschiene (51) lokal gebogen ist und sich in Richtung der Laschenseite des Zellstapels (2) erstreckt, um das äußere elektrische Verbindungsteil (512) zu bilden, wobei an einem oberen Ende des Klebstoffblocks (3) eine dem äußeren elektrischen Verbindungsteil (512) entsprechende dritte Öffnung (31) bereitgestellt ist, wobei das äußere elektrische Verbindungsteil (512) an der dritten Öffnung (31) aus dem Klebstoffblock (3) und dem Gehäuse (1) freiliegt.

9. Batteriemodul nach Anspruch 3, wobei das Gehäuse (1) ferner eine Bodenplatte (13) und eine obere Abdeckung (11) umfasst, wobei die Bodenplatte (13) und die beiden gegenüberliegend angeordneten Seitenplatten (12) verbunden sind und mit der oberen Abdeckung (11) zusammenwirken, um das Gehäuse (1) zu bilden, das an beiden Enden die erste Öffnung aufweist.

10. Batteriemodul nach Anspruch 1, wobei der Klebstoffblock (3) einen Teil der Ausgangsanschluss-Sammelschienenanordnung (5) und mindestens einen Teil einer Lasche des Zellstapels (2) umhüllt.

11. Batteriemodul nach Anspruch 1, wobei der Klebstoffblock (3) einen Schaumklebstoff umfasst.

12. Batteriemodul nach Anspruch 2, wobei das Isolierelement (52) eine Isolierfolie umfasst.

13. Batteriepack, umfassend das Batteriemodul nach einem der Ansprüche 1 bis 12.

## Revendications

1. Module de batterie, comprenant:
un boîtier (1), le boîtier (1) présentant une première ouverture ;
un empilement de cellules (2), l'empilement de cellules (2) présentant un côté languettes, l'empilement de cellules (2) étant disposé dans le boîtier (1), et le côté languettes de l'empilement de cellules (2) correspondant à la première ouverture ;
un bloc adhésif (3) ;
un ensemble de barres omnibus de bornes de sortie (5), l'ensemble de barres omnibus de bornes de sortie (5) étant directement positionné et disposé sur le boîtier (1), et connecté électriquement au empilement de cellules (2), le bloc adhésif (3) recouvrant une partie de l'ensemble de barres omnibus de bornes de sortie (5), et une autre partie de l'ensemble de barres omnibus de bornes de sortie (5) étant exposée à partir du bloc adhésif (3) et du boîtier (1) pour former une partie de connexion électrique externe (512),
le module de batterie étant **caractérisé en ce que**
le bloc adhésif (3) remplit la première ouverture afin de la sceller et de recouvrir le côté languette de la pile de cellules (2), et
une paroi latérale extérieure du bloc adhésif (3) fait partie d'une paroi latérale extérieure du module de batterie.

2. Module de batterie selon la revendication 1, dans lequel l'ensemble de barres omnibus de bornes de sortie (5) comprend une barre omnibus de bornes de sortie (51) et un élément isolant (52), la barre omnibus de bornes de sortie (51) comportant une partie de connexion électrique interne (511) reliée électriquement au empilement de cellules (2) et la partie de connexion électrique externe (512), l'élément isolant (52) recouvre une partie fixe de la barre omnibus de bornes de sortie (51), à l'exception de la partie de connexion électrique interne (511) et de la partie de connexion électrique externe (512).

3. Module de batterie selon la revendication 2, dans lequel le boîtier (1) comprend un panneau latéral (12), la barre omnibus de bornes de sortie (51) étant positionnée et disposée sur le panneau latéral (12).

4. Module de batterie selon la revendication 2, dans lequel un écrou externe (53) est prévu sur la partie de connexion électrique externe (512).

5. Module de batterie selon la revendication 3, dans lequel la barre omnibus de bornes de sortie (51) se présente sous la forme d'une plaque, la barre omnibus de bornes de sortie (51) est située sur une face intérieure du panneau latéral (12), et est parallèle au panneau latéral (12) et ajustée contre celui-ci.

6. Module de batterie selon la revendication 5, dans lequel une rainure de positionnement (121) est prévue sur une paroi latérale intérieure du panneau latéral (12), au moins une partie de la barre omnibus de bornes de sortie (51) étant positionnée et disposée dans la rainure de positionnement (121).

7. Module de batterie selon la revendication 5, dans lequel une deuxième ouverture (122) correspondant à la partie de connexion électrique externe (512) est formée sur le panneau latéral (12), la partie de connexion électrique externe (512) étant exposée à partir du bloc adhésif (3) et du boîtier (1) au niveau de la deuxième ouverture (122).

8. Module de batterie selon la revendication 2, dans lequel la barre omnibus de bornes de sortie (51) est localement courbée et s'étend vers le côté des languettes du empilement de cellules (2) pour former la partie de connexion électrique externe (512), une troisième ouverture (31) correspondant à la partie de connexion électrique externe (512) est prévue à une extrémité supérieure du bloc adhésif (3),
la partie de connexion électrique externe (512) est exposée à partir du bloc adhésif (3) et du boîtier (1) au niveau de la troisième ouverture (31).

9. Module de batterie selon la revendication 3, dans lequel le boîtier (1) comprend en outre un panneau inférieur (13) et un couvercle supérieur (11), le panneau inférieur (13) et les deux panneaux latéraux (12) disposés de manière opposée sont reliés et coopèrent avec le couvercle supérieur (11) pour former le boîtier (1) comportant la première ouverture aux deux extrémités.

10. Module de batterie selon la revendication 1, dans lequel le bloc adhésif (3) enveloppe une partie de l'ensemble de barres omnibus de bornes de sortie (5) et au moins une partie d'une languette de empilement de cellules (2).

11. Module de batterie selon la revendication 1, dans lequel le bloc adhésif (3) comprend un adhésif en mousse.

12. Module de batterie selon la revendication 2, dans lequel l'élément isolant (52) comprend un film isolant.

13. Bloc-batterie, comprenant le module de batterie selon l'une quelconque des revendications 1 à 12.
